# FASCICULE DE BREVET EUROPEEN

(11) **EP 3 158 845 B1**
(45) Date de publication et mention de la délivrance du brevet: **18.03.2020**
(21) Numéro de dépôt: 16193685.1
(22) Date de dépôt: 13.10.2016
(51) Int. Cl.: A01C 7/08, A01C 7/12, A01C 19/00

(54) **DISPOSITIF DE DÉBRAYAGE POUR ÉLÉMENT DE DISTRIBUTION ET SEMOIR COMPORTANT UN TEL DISPOSITIF**
AUSSCHALTUNGSVORRICHTUNG EINER VERTEILEINHEIT UND SÄMASCHINE MIT EINER SOLCHEN AUSSCHALTUNGSVORRICHTUNG
DECLUTCHING DEVICE FOR A DISTRIBUTION ELEMENT AND SEEDER HAVING SUCH A DEVICE

(30) Priorité: 22.10.2015 FR 1560069
(43) Date de publication de la demande: 26.04.2017
(73) Titulaire: Kuhn S.A., 67700 Saverne (FR)
(72) Inventeur: CONSTANT, Olivier, 67340 Weiterswiller (FR)
(74) Mandataire: Esch, Esther Evelyne

(56) Documents cités:
- EP-A1- 0 471 155
- EP-A2- 0 705 533
- US-B1- 6 240 861

## Description

La présente invention se rapporte au domaine technique général du machinisme agricole et notamment les semoirs mécaniques. L'invention concerne plus particulièrement un dispositif de débrayage pour unité de distribution de graines dans un semoir mécanique.

Un semoir mécanique comporte une trémie et une pluralité d'éléments de distribution tels que décrits ci-après. Les éléments de distribution sont disposés en sortie basse de trémie et sont alimentés en graines depuis la trémie par gravité. Chaque élément de distribution dose les graines avant leur acheminement vers un rang ou sillon correspondant.

Il est connu que pour satisfaire les besoins d'une plante lors de sa croissance et assurer un bon rendement du champ, des opérations culturales de fertilisation et de traitements phytosanitaires sont nécessaires après le semis. Ces différentes opérations sont réalisées en fonction du stade de maturité des plantes. Au cours du semis, le champ est jalonné, c'est-à-dire que des traces parallèles non semées servant de repères pour les appareils de fertilisation et/ou de traitement sont prévues dans le champ. Le jalonnage est réalisé par le débrayage ou l'embrayage de certains éléments de distribution. Les intervalles entre les traces non semées (on parle de voie de jalonnage) et la largeur de celles-ci sont déterminés en fonction de la voie des tracteurs, des semoirs et des appareils de traitement, de la largeur de roue de ceux-ci et d'un ratio de largeur entre le semoir et les appareils de traitement. Le fait de couper la distribution pour matérialiser les traces de l'appareil de traitement évite d'écraser les plantes situées sur le passage de l'appareil de traitement et évite donc de gaspiller la semence.

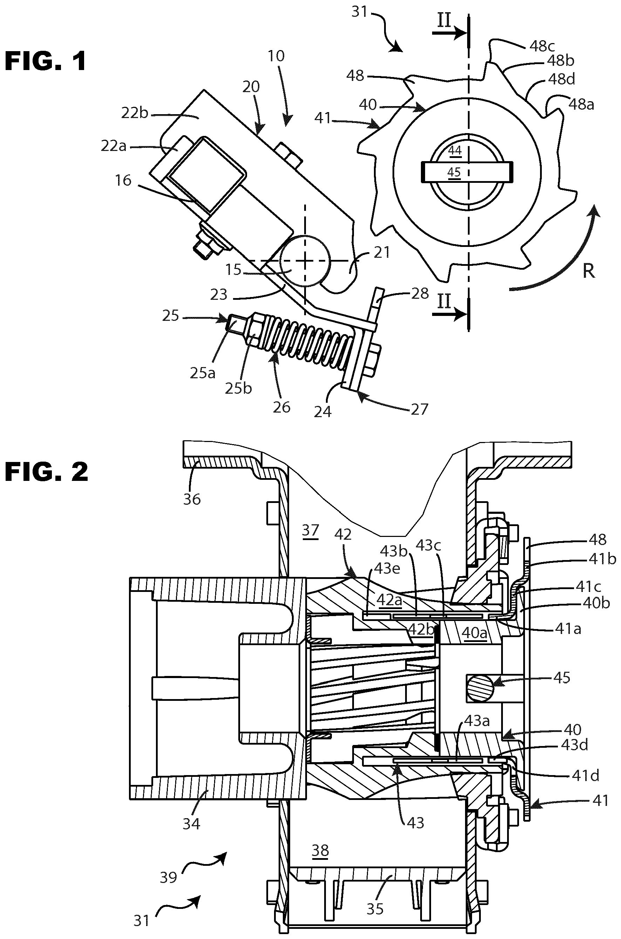

Un élément de distribution 31 connu est représenté en figure 2. Un tel élément de distribution est disposé en sortie basse de trémie. L'élément de distribution 31 comporte un cadre 36 délimitant une chambre d'arrivée des graines 37 en amont et au-dessus d'une partie mobile 39, et une chambre de sortie des graines 38 en aval et en-dessous de la partie 39.

L'élément de distribution 31 comporte encore un moyeu 40, une roue dentée 41, un cylindre à cannelures 42 et un ressort d'embrayage 43 (fig. 2).

Le moyeu 40 présente un corps longitudinal 40a et une couronne radiale 40b en une extrémité du corps 40a.

Le moyeu 40 est fixé sur un arbre d'entraînement 44 du semoir par une goupille 45.

La roue dentée 41 est disposée autour du moyeu 40.

Dans le détail, la roue dentée 41 comporte une partie longitudinale 41a et une couronne 41b. Un renfoncement annulaire 41c est prévu à la jonction entre les parties 41a et 41b. Une encoche 41d est également prévue à travers la partie 41a.

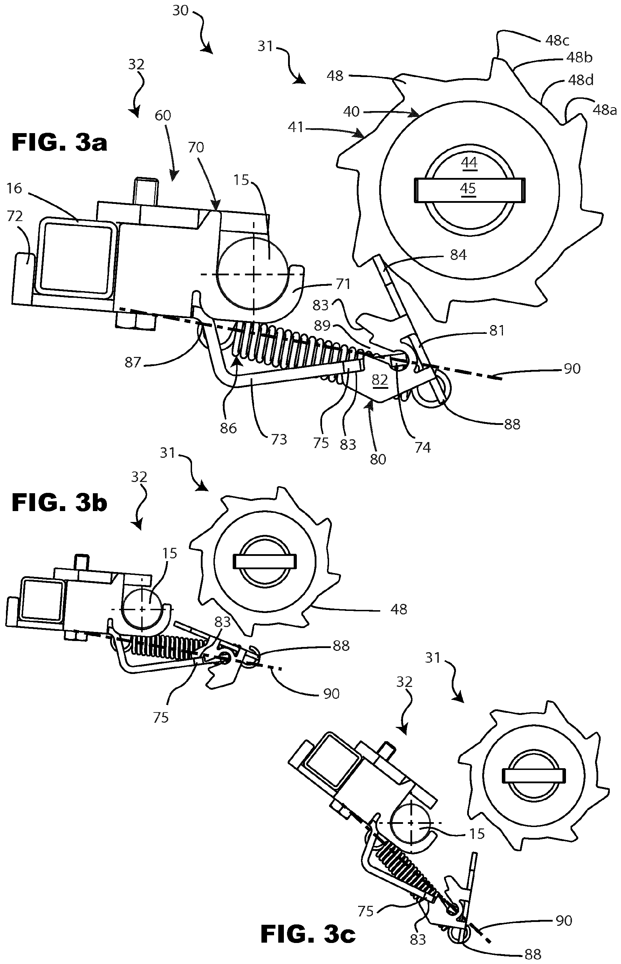

La couronne 41b est pourvue de dents 48. Chacune de ces dents 48 comporte ici une surface radiale 48a opposée à une surface inclinée 48b. Les surfaces 48a et 48b successives sont reliées d'une part par une surface de crête 48c et d'autre part par une surface de fond 48d (voir fig.1 ou 3a).

La roue dentée 41 est disposée de manière concentrique autour du moyeu 40 et la couronne 40b est logée dans le renfoncement 41c (figure 1).

Le cylindre 42 comporte des cannelures hélicoïdales dans le mode de réalisation illustré. Les cannelures peuvent alternativement être droites. D'autres roues connues comportent des ergots plutôt que des cannelures. En figure 2, le cylindre 42 est fixé sur un bloc 34. Un ensemble comportant le bloc 34, le moyeu 40, la roue dentée 41 et le cylindre 42 est mobile sur une plage de translation donnée par rapport au cadre 36 pour adapter la longueur des cannelures au débit de graines souhaité en sortie.

Un clapet 35 est prévu en regard du cylindre 42 pour adapter la distribution à la dimension des graines choisies (fig.2).

Le cylindre 42 dispose d'un corps principal 42a pourvu des cannelures sur sa surface externe et d'une portion tubulaire 42b s'étendant longitudinalement à l'intérieur du corps 42a.

Le ressort d'embrayage 43 est du type hélicoïdal. Il comporte deux séries de spires 43a et 43b et ici une pluralité de spires soudées 43c. Les spires soudées 43c sont ici au nombre de deux mais peuvent être trois ou plus. Souder les spires 43c leur évite de se glisser entre le moyeu 40 et la portion tubulaire 42b.

Le ressort 43 comporte aussi un premier ergot 43d et un deuxième ergot 43e qui s'étendent ici longitudinalement à l'opposé l'un de l'autre depuis la première et la deuxième séries de spires 43a et 43b.

Le premier ergot 43d du ressort est logé dans l'encoche 41d de la roue dentée 41 de manière à rendre solidaire en rotation le ressort 43 et la roue 41.

Le deuxième ergot 43e entre en contact avec un doigt non représenté du cylindre 42, en saillie entre le corps 42a et la portion tubulaire 42b.

Lors du semis, l'arbre 44 entraîne en rotation le moyeu 40 et entraîne par frottement le ressort 43, le premier ergot 43d entraînant la roue dentée 41. Tels que représentés en figure 1, les organes 40, 41, 43 et 44 tournent dans le sens anti-horaire R. Le ressort d'embrayage 43 se resserre autour du corps 40a et de la portion tubulaire 42b, entraînant le cylindre 42 en rotation. L'élément de distribution 31 est alors embrayé et opère la distribution de graines. La vitesse angulaire de l'arbre d'entraînement 44 dépend de paramètres d'entrée tels que la vitesse d'avancement du tracteur et le rapport préalablement choisi d'une boîte de vitesses liée à l'arbre 44.

L'élément de distribution 31 peut, en outre, être débrayé au moyen d'un levier de débrayage 10 (fig.1).

Le levier 10 comporte un corps 20, un boulon 25, un ressort 26 et une cale 27.

Le corps 20 du levier 10 est pourvu de premiers crochets 21 grâce auxquels il est monté en liaison pivot autour d'une tige pivot 15 fixe par rapport à un châssis non représenté du semoir. Le corps 20 présente également des deuxièmes crochets 22a et 22b grâce auxquels il est fixé sur une barre de sélection 16, ici de section carrée. La barre 16 a pour rôle de faire basculer le levier 10 autour de la tige 15 entre deux positions extrêmes : une position rétractée et une position déployée.

Le corps 20 présente aussi une langue 23 pourvue en son extrémité distale d'un rebord 24 transversal et plat.

Le boulon 25 comporte une vis 25a et un écrou freiné 25b. Le ressort 26 est un ressort hélicoïdal de compression, par exemple aux extrémités plates, c'est-à-dire disposées dans un plan.

La cale 27 se présente sous la forme d'une plaquette pourvue d'un orifice (non illustré) de passage de vis en son centre.

Le levier 10 est représenté ici avec la cale 27 montée à plat sur le rebord 24. Plus précisément, la cale 27 est maintenue sur le rebord 24 par l'intermédiaire du boulon 25 et du ressort 26, de telle manière que le ressort 26, le rebord 24 et la partie inférieure de la cale 27 soient maintenus dans cet ordre entre l'écrou 25b et la tête de vis 25a. La cale 27 présente une tête 28 de largeur supérieure à la plage de translation du cylindre 42 par rapport au cadre 36.

Lorsque la cale 27 est montée sur le levier 10, celui-ci est à même de débrayer l'élément de distribution 31. En effet, en position déployée du levier 10, une tête 28 de la cale 27 (fig.1) est logée entre deux dents 48 successives. La roue 41 est bloquée en rotation par la cale 27. L'ergot 43d est empêché de tourner par la roue 41, le ressort 43 est desserré et l'entraînement du cylindre 42 par l'arbre 44 est désengagé. L'élément de distribution 31 est alors débrayé et la distribution de graines est arrêtée.

Le ressort 26 offre une élasticité pour le cas où la cale 27 percuterait l'une des surfaces 48b ou 48c au basculement du levier 10 vers la position déployée.

En fonction de la position du tracteur dans le champ lors du semis, la barre 16 bascule le levier 10 et sa cale 27 entre les positions rétractée et déployée lorsque nécessaire. Préalablement au semis, une cale 27 est prévue uniquement sur les leviers 10 en regard des éléments 31 qui seront débrayés.

Mettre en place les leviers, les déplacer entre éléments de distribution ou les retirer nécessite d'intervenir à l'aide d'outils préalablement à chaque chantier de semis. En outre, l'espace disponible dans les semoirs est restreint. La manipulation et le réglage des cales sont donc fastidieux. L'espace restreint augmente par ailleurs le risque de laisser tomber des pièces ou des outils dans la machine au cours des interventions, ce qui occasionne des pertes de temps.

Les documents EP 0 705 533 A2, EP 0 471 155 A1 et US 6 240 861 B1 de l'état de la technique antérieure divulguent la préambule de la revendication 1.

L'objet de l'invention est de proposer un dispositif de débrayage d'unité de distribution simple, économique et rapide.

L'invention porte sur un dispositif de débrayage pour élément de distribution de semoir comportant un organe de blocage et un organe support sur lequel l'organe de blocage est monté. L'organe de blocage admet deux positions stables par rapport à l'organe support et est basculable entre celles-ci, une des positions stables étant une position active, l'organe de blocage étant configuré pour pouvoir, lorsqu'il est dans sa position active, débrayer l'élément de distribution.

Le dispositif de débrayage selon l'invention a l'avantage de pouvoir être basculé d'une main et sans outil entre les deux positions stables. La distribution du semoir peut donc être paramétrée facilement et rapidement avant chaque nouveau chantier de semis par sélection ou désélection d'éléments de distribution au moyen de dispositifs de débrayage selon l'invention. Ceci est particulièrement pertinent dans le cas d'entrepreneurs amenés à travailler chez différents agriculteurs lors d'une même saison. En effet, chaque nouvelle parcelle pouvant appeler l'utilisation d'appareils de fertilisation et/ou de traitement de différentes largeurs, il peut être nécessaire de sélectionner un jeu d'éléments de distribution différent.

Selon une caractéristique avantageuse, un organe de rappel assure, lorsque l'organe de blocage atteint l'une ou l'autre des positions stables, le maintien de l'organe de blocage dans la position stable atteinte, et/ou le rappel vers celle-ci.

L'organe de rappel est par exemple un ressort de traction ou un ressort de compression. De tels ressorts ont l'avantage de permettre à la fois de forcer le retour et le maintien de l'organe de blocage dans les positions stables, et de permettre une élasticité lorsque l'organe de blocage heurte une partie saillante de la roue de distribution lorsque le levier est basculé en position déployée.

Selon une variante particulière, l'organe de rappel est monté sur l'organe support en un premier point d'accrochage et sur l'organe de blocage en un deuxième point d'accrochage.

L'organe support comporte au moins un ergot formant axe de pivot, par exemple deux, l'organe de blocage étant mobile en rotation entre les deux positions stables autour de l'au moins un ergot.

Selon l'invention, l'organe de blocage comporte deux surfaces d'immobilisation sensiblement en vis-à-vis l'une de l'autre, l'organe support comportant un pion, l'une des surfaces d'immobilisation étant en butée contre le pion dans chaque position stable respective. En variante de l'invention, c'est l'organe de blocage qui comporte le pion, l'organe support comportant alors deux surfaces d'immobilisation en vis-à-vis l'une de l'autre et le pion étant en butée contre l'une des surfaces d'immobilisation dans chaque position stable respective.

L'invention porte également sur un semoir comportant un élément de distribution muni d'un dispositif de débrayage tel que décrit ci-dessus, l'organe support étant basculable entre deux positions extrêmes dont une position déployée par rapport à un châssis de machine.

Avantageusement, l'élément de distribution est débrayé par l'organe de blocage lorsque ce dernier est dans sa position active et que l'organe support est dans une position déployée.

D'autres caractéristiques et avantages de l'invention se dégageront de la description qui va suivre en regard des dessins annexés qui ne sont donnés qu'à titre d'exemples non limitatifs de l'invention. Sur ces dessins :
- la figure 1 est une vue en élévation d'un levier de débrayage en position rétractée et d'un élément de distribution de l'art antérieur embrayé,
- la figure 2 est une vue en coupe longitudinale simplifiée et en élévation de l'élément de distribution de la figure 1 selon le repère II-II ;
- la figure 3a est une vue en élévation d'un levier de débrayage selon l'invention, en position déployée, présentant un organe de blocage en position active, et d'un élément de distribution à l'état débrayé ;
- la figure 3b est une vue en élévation des éléments de la figure 3a montrant l'organe de blocage en position inactive et l'élément de distribution à l'état embrayé ;
- la figure 3c est une vue en élévation des éléments de la figure 3a montrant l'organe de blocage en position active, le levier en position rétractée et l'élément de distribution à l'état embrayé ;
- la figure 4 est une vue en perspective des éléments de la figure 3c montrant en outre un vérin de débrayage en position rétractée.

La figure 3a illustre la partie basse d'une unité de distribution 30 comportant un élément de distribution 31 et un dispositif de débrayage 32.

L'élément de distribution 31 est ici du même type que celui décrit en préambule de cette demande. Par souci de simplicité, seuls certains composants de l'élément de distribution 31 de la figure 2 sont reproduits en figures 1, 3a-3c et 4.

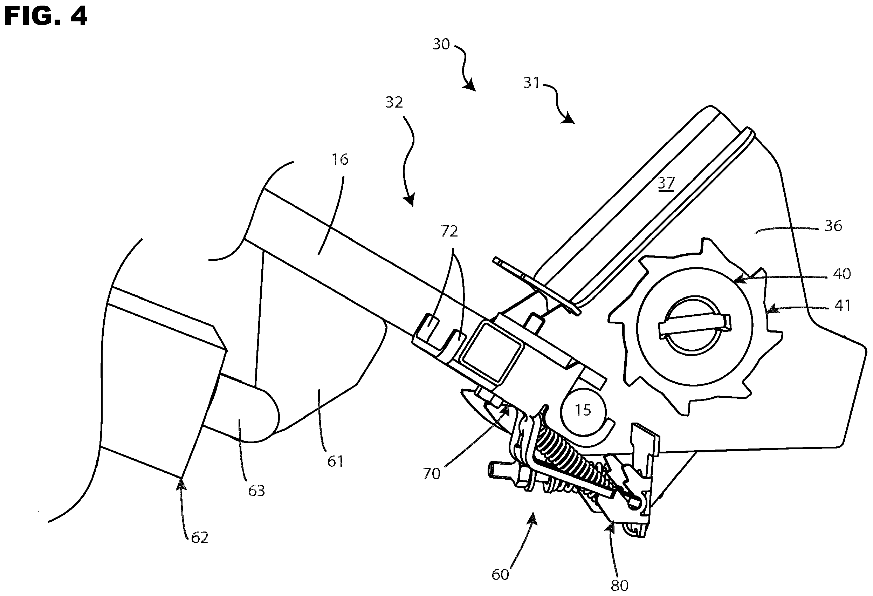

Le dispositif de débrayage 32 est décrit ci-après en référence aux figures 3a à 3c et 4. Le dispositif 32 comporte un levier 60, un flasque de basculement 61 et un vérin 62.

Le levier 60 comporte un organe support 70, ou corps, un organe de blocage 80 et un organe de rappel 86 (voir notamment figure 3a).

Le corps 70 est pourvu de part et d'autre de deux paires de crochets 71 et 72. Les premiers et les deuxièmes crochets 71 et 72 maintiennent respectivement le levier 60 sur une tige pivot 15 et sur une barre 16 du semoir.

Le levier 60 est fixé à l'extrémité de la tige 63 du vérin 62 via le flasque de basculement 61. Le vérin 62 est par exemple solidaire d'un châssis non représenté du semoir. Par translation de la tige 63, la barre 16 et par conséquent le levier 60 sont basculables entre une position rétractée et une position déployée autour de la tige pivot 15.

Le corps 70 comporte également une langue 73 en saillie. La langue 73 est pourvue d'ergots latéraux 74, de part et d'autre de son extrémité distale. La langue 73 comporte également de part et d'autre une paire de butées 75 ou crans d'arrêt, en retrait de l'extrémité distale par rapport aux ergots latéraux 74.

L'organe de blocage 80 est ici une cale. Cette cale 80 comporte un flasque central 81 et deux flasques latéraux 82 ou étriers de blocage. De préférence, les flasques 81 et 82 sont formés d'une pièce. D'autres modes de réalisation sont envisageables, par exemple la soudure des étriers 82 sur le flasque central 81.

Les étriers de blocage 82 sont sensiblement en forme de U. Chaque étrier 82 comporte deux surfaces d'immobilisation 83 en vis-à-vis l'une de l'autre et chacune sur une branche respective de l'étrier. Les étriers 82 sont rattachés de part et d'autre du flasque central 81.

L'organe de rappel 86 est ici un ressort de traction, hélicoïdal, pourvu d'une oreille d'accrochage à chaque extrémité.

La cale 80 est montée mobile sur la langue 73 de sorte que chaque étrier 82 est monté sur un ergot 74 respectif, avec le flasque central 81 en regard de l'extrémité distale. La cale 80 peut pivoter autour des ergots 74 entre deux positions stables déterminées par le contact d'au moins une des surfaces d'immobilisation 83 contre la butée 75.

Avantageusement, un couloir 89 est ici prévu entre les surfaces d'immobilisation 83 afin de faciliter le montage de la cale 80 sur le corps 70 (fig. 3a). Les couloirs 89 sont de largeur minimale supérieure à la plus faible épaisseur des ergots 74. Ainsi, les étriers 82 peuvent être montés sur les ergots 74 par coulissement des ergots 74 dans les couloirs 89.

Alternativement, les couloirs sont absents et la cale 80 est assemblée sur le corps 70 d'une autre manière, par exemple par repliage des étriers 82 de part et d'autre de la langue 73.

Le ressort 86 est monté étiré sur le levier 60 par ses oreilles d'extrémité en deux points d'accrochage 87 et 88. Le premier point d'accrochage 87 se situe ici à la jonction entre le corps 70 et la langue 73. Le deuxième point d'accrochage 88 se trouve sur la cale 80, ici en une extrémité du flasque central 81, sensiblement sur un plan médian entre les étriers 82. Le ressort 86 rappelle constamment le deuxième point d'accrochage 88 de la cale 80 vers le corps 70. La cale 80 est ainsi forcée par le ressort 86 à basculer vers l'une ou l'autre de deux positions stables de la cale 80 par rapport au corps 70 : une position active et une position inactive. Par organe de rappel, il faut donc comprendre « organe de rappel vers l'une ou l'autre des positions stables ». Le basculement de la cale 80 vers l'une ou l'autre des positions stables dépend du côté duquel le deuxième point d'accrochage 88 se situe par rapport à un plan médian 90 défini par le premier point d'accrochage 87 et les deux ergots 74. Ainsi, lorsque le deuxième point d'accrochage 88 se trouve dans le plan médian 90, le ressort 86 est étiré au maximum. Lorsque la cale 80 se trouve dans l'une ou dans l'autre des positions stables, le ressort 86 l'y maintient.

Le ressort 86 offre en outre une élasticité à la cale 80 pour le cas où cette dernière percuterait l'une des surfaces 48b ou 48c au basculement du levier 60 de la position rétractée (figure 3c) vers la position déployée (figure 3a). La roue 41 étant entraînée en rotation lorsque l'élément de distribution 31 est embrayé, la portion d'extrémité 84 de la cale 80 peut glisser contre les surfaces 48c, 48b puis 48d jusqu'à ce que la portion 84 soit en butée contre la surface radiale 48a et le débrayage de l'élément de distribution 31. Ceci évite la détérioration de la cale 80, du levier 60 et des dents 48.

Dans le mode de réalisation illustré, la position inactive correspond à celle des positions extrêmes de la cale 80 dans laquelle le flasque 81 est le plus proche du corps 70 (figure 3b). A l'inverse, la position active correspond à la position dans laquelle le flasque 81 est le plus éloigné du corps 70 (figures 3a et 3c).

Pour faire basculer la cale d'une position stable à l'autre, une simple impulsion manuelle suffit. Ainsi, par rapport au levier 10 connu sur lequel le montage et le démontage d'une cale 27 imposent l'utilisation d'outils, le levier 60 présente l'avantage de pouvoir s'en affranchir. Il en résulte un réglage plus simple et en un temps bien moindre. De plus, le risque de perte d'outils ou de pièces dans l'espace restreint de la machine disparait.

L'élément de distribution 31 n'est débrayé que lorsque la cale 80 est en position active et le levier 60 en position déployée. Il convient alors pour débrayer un élément de distribution 31, à partir du levier 60 en position rétractée, de basculer la cale 80 vers sa position active (l'élément de distribution 31 est alors toujours embrayé) puis de basculer le levier 60 vers sa position déployée. A l'inverse, pour embrayer un élément de distribution 31, il suffit de basculer le levier 60 vers sa position rétractée. La cale 80 peut alors être basculée en position inactive.

Selon les machines, le nombre de leviers 60 par demi-semoir, c'est-à-dire par côté de la machine, varie. Il peut être compris entre un et six par demi-semoir ou être encore plus important. Le gain de temps au réglage du semoir est d'autant plus sensible que le nombre de leviers 60 est important. Ceci est particulièrement pertinent pour les entrepreneurs amenés à intervenir avec leurs machines chez une multitude d'agriculteurs chaque saison, les machines devant être réglées à chaque nouvelle intervention.

En variante non représentée, un semoir peut être pourvu d'un ou plusieurs levier(s) 60 d'un seul côté, l'autre côté en étant dépourvu. Ceci est avantageux économiquement lorsque le jalonnage est fait de manière asymétrique, c'est-à-dire lorsque les deux traces d'une même voie de jalonnage sont matérialisées au cours de deux passages successifs : une trace à l'aller et une trace au retour.

Avant chaque chantier de semis, chacune des cales 80 doit être réglée par basculement vers sa position active ou inactive appropriée. Selon la position du semoir dans le champ, sur chaque demi-semoir, le vérin 62, la barre 16 et les leviers 60 correspondants seront basculés vers leur position rétractée ou déployée. Ceux des leviers 60 dont la cale 80 est en position active (figure 3a) débrayent alors les éléments de distribution 31 respectifs qui cessent de distribuer la semence sur les rangs correspondants. Ces rangs forment les traces de jalonnage que les roues des appareils de traitement pourront parcourir. A l'inverse, les leviers 60 dont la cale 80 est en position inactive laissent les éléments de distribution 31 à l'état embrayé et continuent à distribuer la semence.

Des variantes de réalisation sont possibles sans sortir du cadre de l'invention.

Par exemple, dans un mode de réalisation alternatif non représenté, la langue 73 comporte au moins un étrier ayant deux surfaces d'immobilisation se faisant face, la cale 80 comporte un flasque pourvu d'un ergot en saillie qui est en butée respectivement contre l'une ou l'autre des surfaces d'immobilisation selon la position stable dans laquelle se trouve la cale 80.

En d'autres termes, selon l'invention, l'un parmi l'organe support 70 et l'organe de blocage 80 comporte deux surfaces d'immobilisation 83 sensiblement en vis-à-vis l'une de l'autre, et l'autre parmi l'organe support 70 et l'organe de blocage 80 comporte un pion 75, l'une des surfaces d'immobilisation 83 étant en butée contre le pion 75 dans chaque position stable respective.

Dans une autre variante non représentée, le ressort de traction 86 est substitué par un ressort de compression. Le ressort de compression peut être monté sur une tringle de renfort limitant sa déformation transversale. Le ressort de compression est monté en ses extrémités sur des points d'accrochage disposés respectivement sur le corps et sur la cale, de manière à forcer la cale à basculer vers l'une de ses deux positions stables.

## Revendications

1. Dispositif de débrayage pour élément de distribution de semoir comportant un organe de blocage (80) et un organe support (70) sur lequel l'organe de blocage (80) est monté, l'organe de blocage (80) admettant deux positions stables par rapport à l'organe support (70) et étant basculable entre celles-ci, une des positions stables étant une position active, l'organe de blocage (80) étant configuré pour pouvoir, lorsqu'il est dans sa position active, débrayer l'élément de distribution (31), ***caractérisé en ce que*** l'un parmi l'organe support (70) et l'organe de blocage (80) comporte deux surfaces d'immobilisation (83) sensiblement en vis-à-vis l'une de l'autre, et l'autre parmi l'organe support (70) et l'organe de blocage (80) comporte un pion (75), l'une des surfaces d'immobilisation (83) étant en butée contre le pion (75) dans chaque position stable respective.

2. Dispositif de débrayage selon la revendication précédente, comportant un organe de rappel (86) assurant, lorsque l'organe de blocage (80) atteint l'une ou l'autre des positions stables, le maintien de l'organe de blocage (80) dans la position stable atteinte, et/ou le rappel vers celle-ci.

3. Dispositif de débrayage selon la revendication précédente, l'organe de rappel (86) étant un ressort de traction.

4. Dispositif de débrayage selon la revendication 2, l'organe de rappel (86) étant un ressort de compression.

5. Dispositif de débrayage selon la revendication 2 ou 3, l'organe de rappel (86) étant monté respectivement sur l'organe support (70) en un premier point d'accrochage (87) et sur l'organe de blocage (80) en un deuxième point d'accrochage (88).

6. Dispositif de débrayage selon l'une des revendications précédentes, l'organe support (70) comportant au moins un ergot (74), l'organe de blocage (80) étant mobile en rotation entre les deux positions stables autour de l'au moins un ergot (74) sur l'organe support (70).

7. Dispositif de débrayage selon l'une des revendications 1 à 6, l'organe de blocage (80) comportant deux surfaces d'immobilisation (83) sensiblement en vis-à-vis l'une de l'autre, l'organe support (70) comportant un pion (75), l'une des surfaces d'immobilisation (83) étant en butée contre le pion (75) dans chaque position stable respective.

8. Dispositif de débrayage selon l'une des revendications 1 à 6, l'organe de blocage (80) comportant un pion, l'organe support (70) comportant deux surfaces d'immobilisation sensiblement en vis-à-vis l'une de l'autre, le pion étant en butée contre l'une des surfaces d'immobilisation dans chaque position stable respective.

9. Semoir comportant un élément de distribution (31) muni d'un dispositif de débrayage (32) selon l'une des revendications précédentes, l'organe support (70) étant basculable entre deux positions extrêmes par rapport à un châssis de machine, une des positions extrêmes étant une position déployée.

10. Semoir selon la revendication précédente, l'élément de distribution (31) étant débrayé par l'organe de blocage (80) lorsque ce dernier est dans sa position active et que l'organe support (70) est dans une position déployée.

## Patentansprüche

1. Abstellvorrichtung für ein Verteilungselement einer Sämaschine mit einem Sperrelement (80) und einem Stützelement (70), auf welchem Stützelement das Sperrelement (80) angebracht ist, wobei das Sperrelement (80) zwei stabile Positionen in Bezug auf das Stützelement (70) zulässt und zwischen diesen kippbar ist, wobei eine der stabilen Positionen eine aktive Position ist, wobei das Sperrelement (80) ausgestaltet ist, wenn es sich in seiner aktiven Position befindet, das Verteilungselement (31) abstellen zu können, ***dadurch gekennzeichnet, dass*** eines von dem Stützelement (70) und dem Sperrelement (80) zwei Halteflächen (83) umfasst, die im Wesentlichen einander gegenüberliegen, und das andere von dem Stützelement (70) und dem Sperrelement (80) einen Zapfen (75) umfasst, wobei eine der Halteflächen (83) gegen den Zapfen (75) in jeder jeweiligen stabilen Position anschlägt.

2. Abstellvorrichtung nach dem vorhergehenden Anspruch mit einem Rückstellungselement (86), das, wenn das Sperrelement (80) die eine oder andere der stabilen Positionen erreicht, den Halt des Sperrelements (80) in der erreichten stabilen Position und/oder die Rückstellung in diese sichert.

3. Abstellvorrichtung nach dem vorhergehenden Anspruch, wobei das Rückstellungselement (86) eine Zugfeder ist.

4. Abstellvorrichtung nach Anspruch 2, wobei das Rückstellungselement (86) eine Druckfeder ist.

5. Abstellvorrichtung nach Anspruch 2 oder 3, wobei das Rückstellungselement (86) jeweils auf dem Stützelement (70) an einem ersten Befestigungspunkt (87) und auf dem Sperrelement (80) an einem zweiten Befestigungspunkt (88) angebracht ist.

6. Abstellvorrichtung nach einem der vorhergehenden Ansprüche, wobei das Stützelement (70) mindestens einen Nocken (74) umfasst, wobei das Sperrelement (80) zwischen den zwei stabilen Positionen um den mindestens einen Nocken (74) auf dem Stützelement (70) drehbar ist.

7. Abstellvorrichtung nach einem der Ansprüche 1 bis 6, wobei das Sperrelement (80) zwei Halteflächen (83) umfasst, die im Wesentlichen einander gegenüberliegen, wobei das Stützelement (70) einen Zapfen (75) umfasst, wobei eine der Halteflächen (83) gegen den Zapfen (75) in jeder jeweiligen stabilen Position anschlägt.

8. Abstellvorrichtung nach einem der Ansprüche 1 bis 6, wobei das Sperrelement (80) einen Zapfen umfasst, wobei das Stützelement (70) zwei Halteflächen umfasst, die im Wesentlichen einander gegenüberliegen, wobei der Zapfen gegen eine der Halteflächen in jeder jeweiligen stabilen Position anschlägt.

9. Sämaschine mit einem Verteilungselement (31), das mit einer Abstellvorrichtung (32) nach einem der vorhergehenden Ansprüche ausgestattet ist, wobei das Stützelement (70) zwischen zwei Endpositionen in Bezug auf ein Maschinengestell kippbar ist, wobei eine der Endpositionen eine ausgefahrene Position ist.

10. Sämaschine nach dem vorhergehenden Anspruch, wobei das Verteilungselement (31) durch das Sperrelement (80) abgestellt wird, wenn sich Letzteres in seiner aktiven Position befindet und sich das Stützelement (70) in einer ausgefahrenen Position befindet.

## Claims

1. Declutching device for a seed drill distribution element including a locking element (80) and a support element (70) on which the locking element (80) is mounted, the locking element (80) allowing two stable positions relative to the support element (70) and being switchable between these, one of the stable positions being an active position, the locking element (80) being configured, when in its active position, to be able to declutch the distribution element (31), ***characterised in that*** one from the support element (70) and the locking element (80) includes two abutment surfaces (83) substantially opposite each other, and the other from the support element (70) and the locking element (80) includes a pin (75), one of the abutment surfaces (83) resting against the pin (75) in each respective stable position

2. Declutching device according to the previous claim, including a return element (86) that, when the locking element (80) reaches one or other of the stable positions, keeps the locking element (80) in the stable position reached, and/or brings it back to that position.

3. Declutching device according to the previous claim, the return element (86) being a tension spring.

4. Declutching device according to claim 2, the return element (86) being a compression spring.

5. Declutching device according to claim 2 or 3, the return element (86) being mounted respectively on the support element (70) at a first hitching point (87) and on the locking element (80) at a second hitching point (88).

6. Declutching device according to one of the previous claims, the support element (70) including at least one lug (74), the locking element (80) being movable in rotation between the two stable positions around the at least one lug (74) on the support element (70).

7. Declutching device according to one of the claims 1 to 6, the locking element (80) including two abutment surfaces (83) substantially opposite each other, the support element (70) including a pin (75), one of the abutment surfaces (83) resting against the pin (75) in each respective stable position.

8. Declutching device according to one of the claims 1 to 6, the locking element (80) including a pin, the support element (70) including two abutment surfaces substantially opposite each other, the pin resting against one of the abutment surfaces in each respective stable position.

9. Seed drill including a distribution element (31) fitted with a declutching device (32) according to one of the previous claims, the support device (70) being switchable between two end positions relative to a machine chassis, one of the end positions being a deployed position.

10. Seed drill according to the previous claim, the distribution element (31) being declutched by the locking element (80) when the latter is in its active position and when the support element (70) is in a deployed position.
